# EUROPÄISCHE PATENTSCHRIFT

(11) **EP 1 408 356 B1**
(45) Veröffentlichungstag und Bekanntmachung des Hinweises auf die Patenterteilung: **19.10.2005**
(21) Anmeldenummer: 03018514.4
(22) Anmeldetag: 16.08.2003
(51) Int. Cl.: G02B 6/36, G02B 6/42, G02B 6/255, C03C 25/66, C03B 37/10

(54) **Verfahren zur Herstellung eines geätzten optischen Faserbündels und das geätzte optisches Faserbündel**
Method of producing an etched optical fiber bundle and the etched optical fiber bundle
Procédé de fabrication des faisceaux de fibres gravées optiques et le faisceaux de fibres gravées optiques

(30) Priorität: 03.09.2002 DE 10240508
(43) Veröffentlichungstag der Anmeldung: 14.04.2004
(73) Patentinhaber: Schott AG, 55122 Mainz (DE)
(72) Erfinder: Henze, Inka, Dr., 55288 Udenheim (DE); Weisser, Michael, Dr., Strubrigde, MA 01566 (US); Sommer, Brigitte, 55116 Mainz (DE); Suchi, Andrea, 55232 Alzey (DE); Busch, Ute, 55234 Albig (DE); Sweeck, Tamara, 55583 Bad Münster (DE); Strack, Richard, Sturbridge, MA 01566 (US)

(56) Entgegenhaltungen:
- WO-A-02/40416
- US-A- 3 653 739
- US-A- 4 080 045
- US-A- 4 389 089

## Beschreibung

Die Erfindung bezieht sich auf ein Verfahren zur Herstellung von Geätzten Optischen Faserbündeln, auch "Leached Fiber Bundle" (LFB) genannt, sowie ein verbessertes LFB.

LFBs werden insbesondere als Bildlichtleiter für die Übertragung von optischen Informationen genutzt, beispielsweise in Endoskopen. LFBs beinhalten in der Regel eine Vielzahl von Lichtleitfasern, welche definiert angeordnet sind. Der Durchmesser der Lichtleitfasern beträgt typischerweise 8 bis 120 µm. Die Lichtleitfasern selbst bestehen oftmals aus einem lichtleitenden Kern und einem Mantel, beispielsweise einem Glas oder Kunststoff, mit geringerem Brechungsindex.

Verfahren zur Herstellung von LFBs sind bekannt, beispielsweise aus der WO 02/40416 A1 und US 4,389,089. Um eine geordnete Faseranordnung zu erzielen, werden LFBs durch Ausziehen von entsprechend geordneten Faserbündeln-Vorformen hergestellt, beispielsweise Glasstäben oder -röhren, welche zusätzlich zumindest einige Abstandshalter, sog. "Spacer" aus Ätzglas enthalten, d.h. einem Glas, das durch Behandeln mit Säuren, Basen oder deionisiertem Wasser aufgelöst werden kann. Die Spacer-Vorformen liegen zumeist in Form von Röhren oder Stäben vor. Durch eine passende Anordnung der ätzbaren Spacer kann der Abstand und die Anordnung der Lichtleitfasern untereinander definiert werden.

Die auf diese Weise erhaltenen Faserbündel-Vorformen werden nach den bekannten Verfahren anschließend unter Hitzeeinwirkung ausgezogen, bis der gewünschte Faser- bzw. Faserbündelquerschnitt erreicht wird. Dabei verschmelzen die Spacer mit den Lichtleitfasern und füllen den Zwischenraum zwischen den einzelnen Lichtleitfasern.

Aus der US 3,653,739 ist ein Geätztes Optisches Faserbündel bekannt, bei dem keine separaten Spacer verwendet werden, sondern Finnen in die Vorformen eingearbeitet sind.
Die Finnen verschmelzen beim Ausziehen mit den benachbarten Faserbündel-Vorformen wodurch die Lage der Lichtaustrittspunkte verschoben wird.

Um einen Bildlichtleiter herzustellen, werden die Enden der verschmolzenen Faserbündel mit einer Säure- bzw. laugenbeständigen Schutzschicht versehen und die in nicht geschützten Bereichen befindlichen Spacer werden in heißen Säure- oder Laugenbädern oder Bädern in deionisiertem Wasser entfernt. Auf diese Weise werden dort die Lichtleitfasern wieder freigelegt und das Faserbündel an diesen Stellen flexibel. Die Enden bleiben miteinander verbunden und damit starr und fixiert. Die Endflächen werden weiterhin zur Erhöhung der optischen Qualität oftmals poliert.

Für die optische Qualität kommt es bei vielen Anwendungen ferner darauf an, daß die Lichtaustrittspunkte, d.h. die Endflächen der Lichtwellenleiter, eine genau definierte Lage in der Matrix der Endflächen von Lichtleitfasern und Spacern einnehmen.

Der beschriebene Fertigungsprozess hat den Nachteil, dass durch das Verschmelzen der Lichtleitfasern und des Ätzglases im Endbereich des Faserbündels eine Verschiebung der Fasern aus ihrer ursprünglichen geometrischen Position eintritt und somit eine genaue Lage der Lichtaustrittspunkte am Ende des Lichtleiterbündels verloren geht. Für Anwendungen, die eine hohe Bild- oder Lichtübertragungsqualität benötigen, beispielsweise Verbindungseinheiten zur optischen Datenübertragung (Optical Interconnects), kann daher dieses Verfahren zur Herstellung von optischen Faserbündeln nicht angewendet werden.

Ein generelles Problem bei optischen Faserbündeln ist deren oftmals geringe mechanische Belastbarkeit. Werden Faserbündel gebogen, reiben die Einzelfasern gegeneinander und führen so zu einer verstärkten mechanischen Beanspruchung, die in Faserbrüchen enden kann. Befinden sich Schmutzpartikel zwischen den Einzelfasern, wird die Beanspruchung verstärkt. Jede gebrochene Lichtleitfaser führt zu einem Ausfall des zugeordneten Lichtpunktes, so dass bei einer entsprechenden Anzahl von gebrochenen Fasern das gesamte Faserbündel ausgetauscht werden muss. Um die Lebenszeit des optischen Faserbündels zu verlängern, wird in der WO 02/40416 A1 vorgeschlagen, ein spezielles Pulver zwischen die Einzelfasern des Bündels einzubringen und ein schützendes Netz um den flexiblen Bereich des optischen Faserbündels zu legen. Auch diese Maßnahmen reichen für bestimmte Anwendungszwecke nicht aus, um eine ausreichende Haltbarkeit der Faserbündel zu bewirken.

Der Erfindung liegt die Aufgabe zugrunde, ein Verfahren zur Herstellung eines Geätzten Optischen Faserbündels mit einer möglichst genau definierten Lage der Lichtaustrittspunkte bereitzustellen, sowie ein Geätztes Optisches Faserbündel, das eine möglichst genau definierte Lage der Lichtaustrittspunkte aufweist.

Die Aufgabe wird durch das erfindungsgemäße Verfahren zur Herstellung von Geätzten Optischen Faserbündeln sowie das Geätzte Optische Faserbündel nach den unabhängigen Ansprüchen gelöst. Bevorzugte Ausführungsformen ergeben sich aus den Unteransprüchen.

Die gewünschte Lage der Lichtleitfasern ergibt sich wie eingangs beschrieben aus der Anordnung der Faser-Vorformen und der Spacer-Vorformen, bevor sie zu Fasern ausgezogen werden. Durch den Ziehprozess wird nur die absolute Größe der Faserdurchmesser und damit die absolute Raumlage der Lichtaustrittspunkte beeinflusst, nicht aber die relative Lage zueinander. Damit diese Relativlage durch die herkömmliche Verschmelzung des oder der Endbereiche nicht verschoben wird, werden nach dem erfindungsgemäßen Verfahren die angeordneten Faser-Vorformen mitsamt den Spacer-Vorformen aus Ätzglas so ausgezogen, dass die Einzelfasern und Spacer zumindest eine bestimmte Strecke über den Endbereich hinaus nicht vollständig miteinander verschmelzen, sondern nur an ihren Kontaktflächen. Auf diese Weise entstehen Zwischenräume zwischen den Einzelfasern und den Spacern, im weiteren "Zwickel" genannt.

Der Abstand der Lichtaustrittspunkte untereinander, im weiteren "Pitch" genannt, wird von dem Durchmesser der Spacer bestimmt. Die Größe der Zwickel ist wiederum vom Verhältnis von Lichtleitfaserdurchmesser und Spacerdurchmesser abhängig. Im allgemeinen werden die Durchmesser der Lichtleitfasern und der Spacer so aufeinander abgestimmt sein, dass die Zwickel eine möglichst geringe Größe haben.

Die Zwickel müssen vor den nächsten Verfahrensschritten, dem Polieren der Endfläche und Entfernen der ausgezogenen Spacer im zu flexibilisierenden Bereich des Faserbündels, aufgefüllt werden. Ohne das Auffüllen der Zwickel wäre es unmöglich, einen optisch hochwertigen Endbereich zu erhalten, da während des Entfernens der Spacer die verwendeten Bäder (z.B. Säure- oder Laugenbäder oder Bäder in deionisiertem Wasser) in die Zwickel eindringen und auch die Spacer im Endbereich auflösen oder zumindest angreifen würden, so dass entweder kein starrer Endbereich oder zumindest keine genaue Lage der Lichtaustrittspunkte zu erhalten wäre. Desweiteren würde beim Polieren der Endflächen Abrieb durch die Zwickel in den später flexiblen oder schon flexibilisierten Bereich des Faserbündels gelangen und dort durch Reibung zu einer verstärkten mechanischen Beanspruchung der Lichtleitfasern und somit zu einer verminderten Lebensdauer des Faserbündels führen.

Es hat sich überraschenderweise gezeigt, dass das notwendige Auffüllen der Zwickel auf einfache Weise mit Klebstoffen erfolgen kann. An die Klebstoffe sind einige Anforderungen zu stellen, die im weiteren erläutert werden. Beispiele von zu verwendenden Klebstoffen werden in den Ausführungsbeispielen genannt. Sofern die Klebstoffe in den Zwickeln nicht selbständig aushärten, können nach dem Einbringen der Klebstoffe in die Zwickel geeignete Maßnahmen zum Härten ergriffen werden. Je nach Klebstoff kann das beispielsweise thermisches Aushärten, Aushärtung mit Hilfe gasförmiger Katalysatoren oder Bestrahlung mit UV- oder sichtbarem Licht umfassen. Auch Kombinationen zwischen Aushärteverfahren sind möglich.

Nachdem die Zwickel gefüllt und die Klebstoffe zumindest teilweise ausgehärtet sind, wird das zumindest eine unverschmolzene Ende des Faserbündels mit einer Schutzschicht versehen, beispielsweise einem säure- oder laugenbeständigen Wachs, und die Spacer werden in einem Ätzbad oder durch andere geeignete Maßnahmen entfernt. Die Schutzschicht an dem oder den Endbereichen verhindert, dass die eingesetzten Mittel zum Entfernen der Spacer die Spacer in den Endbereichen angreifen.

Der Bereich des Faserbündels, in dem die Spacer entfernt wurden, im allgemeinen der Mittelbereich, ist flexibel, der oder die Endbereiche bleiben starr. Das Einbringen der Klebstoffe in die Zwickel kann auf vielfältige Weise erfolgen. Eine Möglichkeit hierzu ist z.B. das Einbringen der Klebstoffe mit Hilfe der Kapillarkräfte der Zwickel. Dazu wird der Endbereich des Faserbündels in der Regel in den Klebstoff eingetaucht, woraufhin der Klebstoff durch die Kapillarkräfte bis zu einer bestimmten Höhe in die Zwickel gesogen wird. Problematisch hierbei ist allerdings dass größere Füllhöhen schwierig zu erreichen sind und dass die Kapillarkräfte nur beim Verfüllen eines einzigen Endes des Faserbündels ausgenutzt werden können, weil der Gegendruck der in den Zwickeln befindlichen Gasvolumina das Verfüllen des zweiten Endes des Faserbündels erschwert.

Der Erfindung liegt der Gedanke zugrunde, dass das Einbringen der Klebstoffe in die Zwickel mit Hilfe einer Druckdifferenz zwischen der Atmosphäre außerhalb des Faserbündels und den in den Zwickeln befindlichen Gasvolumina erfolgen kann, wobei in den Zwickeln Unterdruck anliegen sollte. Der Unterdruck kann von einer Vakuumpumpe erzeugt werden. Diese Methode ist höchst einfach anzuwenden, wenn die Zwickel nur eines Endes des Faserbündels verfüllt werden sollen. Dann kann das aufzufüllende Ende in die Klebstoffe getaucht und an das andere Ende Unterdruck angelegt werden. Auf diese Weise wird Klebstoff von dem eingetauchten Ende in die Zwickel gesaugt. Soll auch das andere Ende des Faserbündels mit Klebstoff verfüllt werden, werden Maßnahmen erforderlich, um den Unterdruck im später zu flexibilisierenden Bereich, im allgemeinen im Mittelbereich, des Faserbündels anlegen zu können.

Eine andere Möglichkeit zum Erzeugen des Unterdrucks und zum Einbringen der Klebstoffe ist das Erwärmen und anschließende Abkühlen der Gasvolumina in den Zwickeln. Werden die in den Zwickeln befindlichen Gasvolumina erst erwärmt, beispielsweise durch Erwärmen des Faserbündels bzw. Bereichen desselben, dehnen sich die erwärmten Gasvolumina aus. Werden das oder die Enden des Faserbündels rechtzeitig in die Klebstoffe getaucht, saugen die sich durch das Abkühlen zusammenziehenden Gasvolumina die Klebstoffe in die Zwickel. Auf diese Weise können auch beide Enden des Faserbündels auf höchst einfache Weise verfüllt werden. Dabei kann es erforderlich sein, dass ein Endes des Faserbündels zumindest temporär verschlossen werden muss.

Die Verwendung von Unterdruck hat generell den Vorteil, dass auf diese Weise die Füllhöhe der Klebstoffe in den Zwickeln gezielt eingestellt werden kann. Darüber hinaus sind höhere Füllhöhen als bei den auf Kapillarkräften beruhenden Verfahren zu erreichen. Ferner können Klebstoffe aus einem größeren Viskositätsbereich verwendet werden. Selbstverständlich können statt eines einzigen Klebstoffes generell Kombinationen von mehreren Klebstoffen verwendet werden.

Bevorzugt werden die Zwickel in zwei starren Endbereichen eines LFB mit Hilfe von Unterdruck bis zu einer Füllhöhe von mindestens 0,5 cm mit zumindest einem Klebstoff verfüllt. In einer weiteren bevorzugten Ausführungsform werden die Zwickel bis zu einer Füllhöhe von 0,5 cm bis 5 cm, besonders bevorzugt von 1,5 cm bis 2,5 cm mit zumindest einem Klebstoff verfüllt. Die Füllhöhe wird jeweils von der Endfläche des Endbereichs an in Richtung des flexiblen Bereichs gemessen. Besonders bevorzugt werden die Zwickel in den starren Endbereichen vollständig mit zumindest einem Klebstoff verfüllt. Das beinhaltet, daß die Füllhöhe der Klebstoffe der Höhe der starren Endbereiche entspricht und diese unter Umständen sogar übersteigen kann.

Nach dem Verfüllen der Zwickel kann es erforderlich sein, die Klebstoffe auszuhärten, sofern das nicht selbständig erfolgt. Dazu können bevorzugt thermische oder auf Lichteinstrahlung beruhende Verfahren verwendet werden. Auch Kombinationen von beiden sind denkbar. Besonders bevorzugt werden mit Hilfe von UV-Bestrahlung härtbare Klebstoffe verwendet. Das UV-Licht kann in die Lichtleitfasern und Spacer eingestrahlt werden und unterstützt so die Aushärtung der Klebstoffe.

Bei der Auswahl der Klebstoffe zum Verfüllen der Zwickel muss auf bestimmte Eigenschaften geachtet werden. Zum einen müssen sie im nicht ausgehärteten Zustand fließfähig genug sein, um in die Zwickel einzudringen. Daher werden bevorzugt Klebstoffe mit einer Viskosität von 5·10⁻² Pa·s bis 5 Pa·s bei 25°C °C verwendet. Desweiteren müssen die Klebstoffe folgende Eigenschaften aufweisen: keine zu große Volumenkontraktion während des Aushärtens, einen geringen thermischen Ausdehnungskoeffizienten (bevorzugt <100 ppm/K), eine gute Haltbarkeit bei Klimatests und einer dauerhaften Erwärmung auf 120°C, kein Entgasen von Komponenten während des Entfernens der Spacer und einer Erwärmung auf 150°C für eine Dauer von 5 Minuten, hohe Beständigkeit gegenüber heißen Säuren, Laugen und/oder deionisiertem Wasser, insbes. gegenüber den verwendeten Mitteln zum Entfernen der Spacer, und eine gute Haftung an Glas. Bevorzugte Klebstoffe weisen darüber hinaus ein möglichst geringes Auspolieren auf, d.h. beim Polieren der Endflächen werden sie nicht wesentlich stärker abgetragen als das Glasmaterial, so dass in den verfüllten Zwickeln zwischen Lichtleitfasern und Spacern keine Gruben entstehen, die bei einer Zickelgröße von 45 µm tiefer sind als 3 µm. Unter der Zwickelgröße ist die Höhe der durch den Zwickel gebildeten, im wesentlichen dreieckigen Form zu verstehen. Auf diese Weise kann eine qualitativ hochwertige, d.h. im wesentlichen ebene Oberfläche erzielt werden. Es wurde festgestellt, daß Klebstoffe, die auf Epoxid-Basis beruhen, voranstehende Eigenschaften erfüllen. Insbesondere solche Klebstoffe, die Nanopartikel enthalten, zeigten nur wenig Tendenz zum Auspolieren.

Nach dem Entfernen der Spacer liegt das Faserbündel in der Regel als Faserbündel mit flexiblem Mittelbereich und starren, fixierten Endbereichen vor. In den Endbereichen sind die Spacer erhalten, im flexiblen Bereich entfernt. Das bedeutet, dass im flexiblen Bereich im wesentlichen nur noch Lichtleitfasern mit bestimmten Abständen zueinander vorhanden sind. Im Gegensatz zu Einzelfasern, die ebenfalls für die Datenübertragung eingesetzt werden, haben die im flexiblen Bereich der Faserbündel verbleibenden Lichtleitfasern keinen nennenswerten Schutz durch zusätzliche Ummantelungen, z.B. dicke Kunststoffmantel. Im flexiblen Bereich können die Einzelfasern, wie in der WO 02/40416 A1 beschrieben, vor mechanischer Beanspruchung geschützt werden. Es hat sich jedoch herausgestellt, dass insbesondere die Übergangsbereiche zwischen festen Endbereichen und flexiblem Mittelbereich besonders empfindlich gegenüber mechanischer Belastung sind, die beispielsweise durch den großen Abstand der Fasern zueinander und damit großen Neigungswinkel der Einzelfasern verursacht werden können. Hier treten gehäuft Faserbrüche auf. Daher werden die Übergangsbereiche in einer bevorzugten Ausführungsform zusätzlich geschützt. Dies gelingt auf überraschend einfache Weise dadurch, dass in den Übergangsbereichen Klebstoffe zumindest teilweise zwischen die freigelegten Lichtleitfasern eingebracht werden. An diese Klebstoffe können andere Anforderungen gestellt werden als an die für das Auffüllen der Zwickel verwendeten, da sie nicht das Entfernen der Spacer und eine mechanische Bearbeitung überstehen müssen. Stattdessen haben sie die Aufgabe, die mechanische Beanspruchung der Lichtleitfasern im Übergangsbereich zu vermindern.

Es hat sich gezeigt, dass beste Ergebnisse mit Klebstoffen erzielt werden, die im ausgehärteten Zustand die Lichtleitfasern noch in soweit flexibel umschließen, dass der Druck bei Biegebeanspruchung der Übergansbereiche von den Lichtleitfasern unter Verformung der Klebstoffe abgefangen und ggf. an die starren Endbereiche abgeleitet wird, ohne jedoch so weich zu sein, dass sie von den Lichtleitfasern zerschnitten werden. Für die Klebstoffe der Übergangsbereiche ist es auch wichtig, dass keine durch die Klebstoffe induzierten Spannungen auf die Einzelfasern übertragen werden. D.h. je weicher die Klebstoffe sind, um so eher kann ein hoher Schrumpf oder hoher thermischer Ausdehnungskoeffizient der Klebstoffe in denselben direkt abgebaut werden, so dass die dadurch entstehenden Belastungen nicht auf die Fasern übertragen werden. Fasern, die einer hohen Spannung ausgesetzt sind, zeigen weiterhin hohe Dämpfungswerte bei der Lichtübertragung. Generell sind Klebstoffe zu bevorzugen, die niedrige thermische Dehnungen, hohe Reißdehnungen, gute Haltbarkeit bei Klimatests und einer dauerhaften Erwärmung auf 120°C sowie eine gute Haftung an Glas aufweisen. Der Schutz der Übergangsbereiche ist nicht nur bei LFBs mit verfüllten Zwickeln anwendbar, sondern auch bei herkömmlichen LFBs mit verschmolzenen Endbereichen.

Es wurde festgestellt, daß Klebstoffe, die auf Silikon- oder Acrylat-Basis beruhen, die voranstehenden Voraussetzungen erfüllen. Bei den auf Acrylat-Basis beruhenden Klebstoffen werden besonders bevorzugt solche Klebstoffe verwendet, die Copolymere beinhalten, z.B. Polyurethan. Das Einbringen der Klebstoffe in den oder die Übergangsbereiche kann bevorzugt durch Einspritzen entweder manuell oder automatisch mit Hilfe von Spritzen mit dünnen Nadeln erfolgen.

Als weiterer Schritt können das oder die starren Enden des Faserbündels mit Hülsen versehen werden, die beispielsweise aus Metall, Glas, Kunststoff, Keramik oder Kompositen bestehen kann. Die Hülsen schützen einerseits die starren Enden des Faserbündels, andererseits können sie den Anschluss an andere optische oder optoelektronische Komponenten herstellen.

Um die Arbeitsschritte an dem nicht mit Klebstoffen geschützten ausgezogenen Faserbündel zu minimieren, kann vor dem Entfernen der Spacer oder sogar schon vor dem Verfüllen der Zwickel die zuvor genannte Hülse an dem oder den Enden des Faserbündels angebracht werden.

Gegenstand der Erfindung ist weiterhin die Bereitstellung eines Geätzten Optischen Faserbündels, welches eine möglichst genaue Lage der Bildaustrittpunkte aufweist. Seine Endbereiche sind nicht vollständig verschmolzen, sondern weisen Zwickel auf. Ein erfindungsgemäßes Faserbündel weist zumindest zwei starre Endbereiche mit Zwickeln auf, die mit zumindest einem Klebstoff bis zu einer Füllhöhe von mindestens 0,5 cm, bevorzugt von 0,5 cm bis 5 cm, besonders bevorzugt von 1,5 cm bis 2,5 cm verfüllt sind. In einer weiteren bevorzugten Ausführungsform sind die Zwickel in den Endbereichen vollständig mit zumindest einem Klebstoff verfüllt.

Ein weiteres erfindungsgemäßes Geätztes Optisches Faserbündel weist zumindest einen starren Endbereich mit Zwickeln auf, die mit zumindest einem Klebstoff verfüllt sind, dessen Viskosität im nicht ausgehärteten Zustand 5·10⁻² Pa·s bis 5 Pa·s bei einer Temperatur von 25 °C beträgt.

In einer bevorzugten Ausführungsform des Geätzten Optischen Faserbündels sind die in die Zwickel verfüllten Klebstoffe beständig gegenüber heißen Ätzsäuren und/oder heißen Ätzlaugen und/oder deionisiertem Wasser. Ferner weisen die verfüllten Klebstoffe bevorzugt ein höchstens geringes Auspolieren auf.

In einer bevorzugten Ausführungsform weist das Faserbündel zumindest einen Übergangsbereich zwischen zumindest einem starren Endbereich und den flexiblen Bereichen auf, der mit zumindest einem Klebstoff geschützt ist.

Die Verteilung und Auswahl der Klebstoffe zum Schutz der Übergangsbereiche wurde ebenfalls zuvor beschrieben. Durch die geschützten Übergangsbereiche erweist sich das erfindungsgemäße Faserbündel als überraschend widerstandsfähig gegenüber mechanischer Beanspruchung.

In einer besonders bevorzugten Ausführungsform ist das erfindungsgemäße Faserbündel an zumindest einem Ende mit einer Hülse versehen. Die Hülse kann aus Metall, Glas, Kunststoff, Keramik oder Komposit bestehen.

Das erfindungsgemäße Faserbündel kann als Bildlichtleiter für die Übertragung von Bildinformationen eingesetzt werden. Dabei ist es selbstverständlich möglich, dass bei einer entsprechenden Anordnung der optischen Faserbündel jedes nur einen Teil des darzustellenden Gesamtbildes überträgt.

Bevorzugt wird das erfindungsgemäße Faserbündel in der Endoskopie verwendet.

Ebenfalls möglich ist die Verwendung des erfindungsgemäßen Faserbündels für die optische Datenübertragung. Darunter sind beispielsweise die digitale und analoge optische Datenübertragung zu verstehen. Besonders bevorzugt findet das erfindungsgemäße Faserbündel als Optisches Interconnect Verwendung, d.h. als optisches Element, welches Daten, Bild- oder allgemein Lichtinformationen zwischen optischen funktionalen Einheiten überträgt und/oder gezielt umsetzt.

Die Erfindung wird nachfolgend anhand der Zeichnungen und Ausführbeispiele näher erläutert.

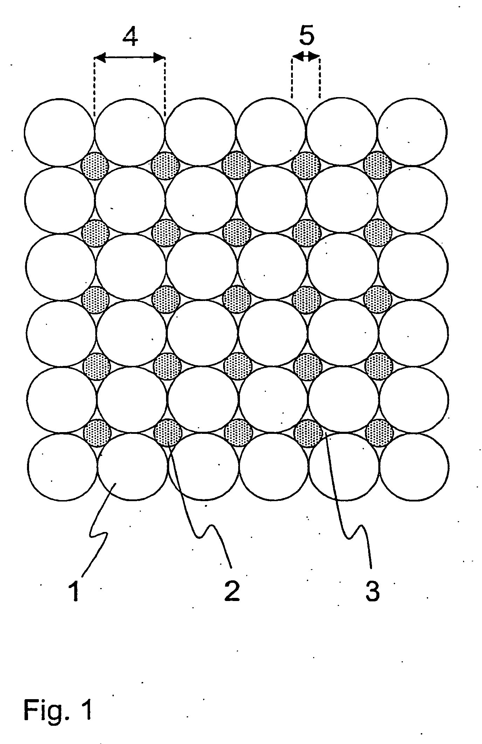

Fig. 1 zeigt die Draufsicht eines Endbereichs eines ausgezogenen Geätzten Optischen Faserbündels. Die Lichtleitfasern (2) und Spacer (1) sind nicht vollständig miteinander verschmolzen, so dass sich Zwickel (3) zwischen ihnen befinden. Nicht dargestellt ist, dass die Lichtleitfasern (2) üblicherweise aus einem lichtleitendem Kern und einem Mantel bestehen. Die Zwickel (3) werden später mit zumindest einem Klebstoff aufgefüllt.

Der Pitch (4) zwischen den Lichtleitfaserenden (2) untereinander wird durch den Durchmesser der Spacer (1) bestimmt, wenn der Durchmesser (5) der Lichtleitfasern (2) kleiner bzw. gleich groß wie der kleinste Zwickeldurchmesser ist. Ist der Durchmesser (5) kleiner als der kleinste Zwickeldurchmesser, so kann er durch ein Spacer-Rohr um die Lichtleitfasern (2) angepasst werden.

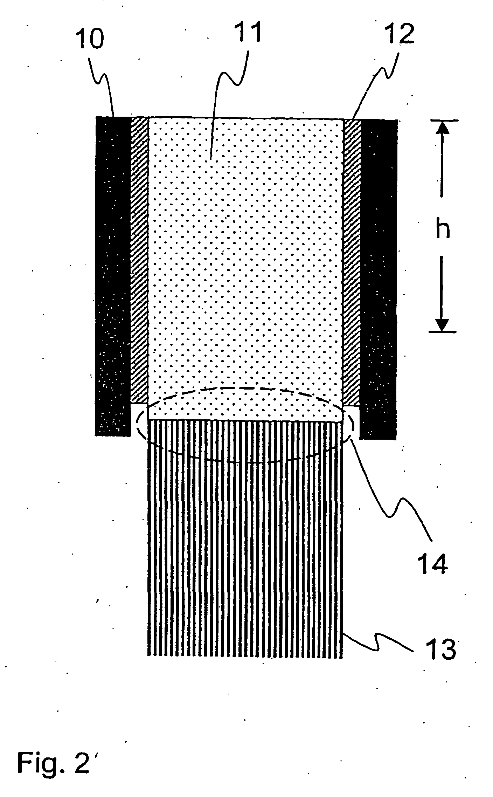

Fig. 2 zeigt den Längsschnitt durch den Endbereich eines ausgezogenen optischen Faserbündels mit nicht vollständig verschmolzenen Endflächen. Der starre Endbereich (11) ist mit einer Hülse (10) aus beispielsweise Metall, Glas, Kunststoff, Keramik oder Komposit versehen. Im starren Endbereich (11) sind Lichtleitfasern und Spacer vorhanden, die Zwickel sind mit Klebstoff aufgefüllt. Zwischen Hülse (10) und Endbereich (11) kann eine Zwischenschicht (12) eingebracht sein, welche den empfindlichen Endbereich vor Beschädigungen durch mechanische Belastungen schützt und/oder eine formschlüssige Verbindung zwischen Endbereich (11) und Hülse (10) bildet. Diese Zwischenschicht (12) kann beispielsweise aus einem Wachs bestehen.

Der starre Endbereich (11) ist bis zu einer Füllhöhe (h) mit zumindest einem Klebstoff aufgefüllt. Selbstverständlich ist eine vollständige Verfüllung des Endbereichs möglich. Die Füllhöhe (h) wird ab der Endfläche des starren Endbereichs (11) in Richtung des flexiblen Bereichs (13) gemessen.

An den Endbereich (11) schließt sich der Übergangsbereich (14) zwischen starrem Endbereich (11) und flexiblem Bereich (13) an. Dort werden erfindungsgemäß der oder die Klebstoffe zum Schutz des Übergangsbereichs eingebracht.

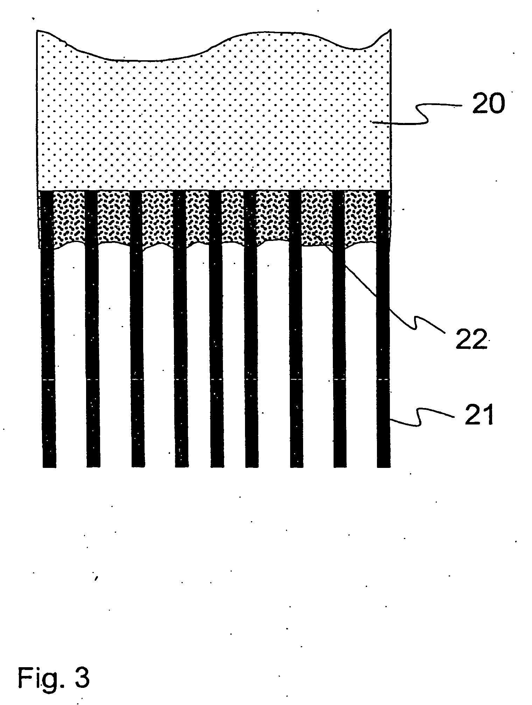

In Fig. 3 ist der Übergangsbereich (14) der Fig. 2 schematisch vereinfacht vergrößert dargestellt. Die flexiblen Lichtleitfasern (21) treffen dort auf den starren Bereich (20), der nicht vollständig dargestellt wird. Der starre Bereich (20) beinhaltet sowohl Lichtleitfasern als auch Spacer. In die Zwischenräume zwischen den Lichtleitfasern (21) ist Klebstoff (22) eingebracht, welcher den Übergangsbereich vor mechanischer Beanspruchung schützt.

In den folgenden Ausführbeispielen wurden optische Faserbündel mit einem Pitch von 250 µm gemäß dem erfindungsgemäßen Verfahren hergestellt.

Für das Verfüllen der Zwickel haben sich in Versuchen Klebstoffe der Vitralit®-Reihe der Firma Panacol-Elosol als besonders geeignet herausgestellt, hier vor allem Vitralit® 1508 mit 15% Nanopartikeln und Vitralit® 1605 (Viskosität: 0,3-0,75 Pa·s bei 25 °C). Vorteilhaft sind auch die Klebstoffe der Araldit® - Reihe der Ciba-Spezialitätenchemie einzusetzen, hier insbesondere AY 103 und HY 956 (Viskosität: 3 Pa·s bei 25 °C). Vitralit® beruht auf 1K-Epoxid- und Araldit® auf 2K-Epoxid-Basis.

Mit den genannten Klebstoffen wurden erfindungsgemäße Faserbündel gemäß dem erfindungsgemäßen Verfahren hergestellt. Alle genannten Klebstoffe zeigten ein nur sehr geringes Auspolieren und eine sehr gute Beständigkeit im zuvor beschriebenen Herstellungsprozess. Insbesondere während des Auftragens einer Wachsschicht (12) bei 150°C als Schutz des Endbereichs (11) vor dem Entfernen der Spacer und dem anschließenden Ätzen zum Entfernen der Spacer mit heißen Säuren, Laugen und deionisiertem Wasser traten keine Veränderungen der mechanischen Festigkeit der Klebstoffe und keine Ausgasungen auf.

Bei dem verwendeten Pitch (4) von 250 µm und einem Lichtleitfaserdurchmesser (5) von 100 µm wurden die Zwickel (3) ausgefüllt, indem erst an ein Ende des Faserbündels durch eine Vakuumpumpe erzeugter Unterdruck angelegt und das andere Ende bis zu einer Füllhöhe (h) von 2 cm mit Klebstoff verfüllt wurde. Anschließend wurde das ausgezogene, noch starre Faserbündel mit Hilfe eines Heißluftföns (Einstellung: 450°C für 60 s) erwärmt, das noch nicht verfüllte Ende in den Klebstoff getaucht und anschließend abgekühlt. Die sich kontrahierenden Gasvolumina in den Zwickeln (3) sorgten dafür, dass der Klebstoff bis zu einer Füllhöhe (h) von 2 cm in das starre Faserbündelende eingezogen wurde.

Es ist ebenfalls möglich, statt dem Verfüllen der Zwickel des ersten Endbereichs mit Hilfe einer Vakuumpumpe auch den ersten Endbereich durch das Ausnutzen der Kontraktion von zuvor erwärmten Gasvolumina mit Klebstoffen zu verfüllen, wenn vor dem Eintauchen in die Klebstoffe das andere Ende zumindest temporär verschlossen wird, beispielsweise mit einer Teflonfolie.

Selbstverständlich können zuerst auch die Zwickel eines starren Endes des Faserbündels unter Ausnutzen der Kapillarkräfte mit Klebstoffen verfüllt werden. In das andere Ende muß das Einbringen der Klebstoffe dann allerdings mit Hilfe von Unterdruck wie beschrieben erfolgen.

Die zuvor mit Klebstoff verfüllten Faserbündelenden wurden nachfolgend mit Endhülsen aus Metall versehen, poliert, die Endbereiche mit Wachs geschützt und die Spacer wie beschrieben entfernt, so dass der Mittelbereich flexibilisiert wurde. In Biegetests mit einem Biegeradius von 25 mm, 24000 Biegungen und einer Belastung des unteren Endes mit einem Gewicht von 20 g hat sich gezeigt, dass bei dem vorliegenden Pitch (4) von 250 µm und einem Lichtleitfaserdurchmesser (5) von 100 µm mehr als die Hälfte aller Lichtleitfasern (21) im Übergangsbereich (14) brachen. Das bedeutet im Herstellungsprozess eine hohe Ausschussquote bzw. für optische Faserbündel in der Anwendung eine geringe Lebensdauer. Zum Schutz der Lichtleitfasern (21) im Übergangsbereich (14) wurden Klebstoffe mit Hilfe von Spritzen mit dünnen Nadeln eingebracht. Um eine ausreichende Verteilung der Klebstoffe zu gewährleisten, wurden sie tropfenweise von mehreren Stellen im Übergangsbereich (14) des Faserbündels eingebracht.

Als besonders geeignet zum Schutz des Übertragungsbereichs (14) haben sich die Klebstoffe Sylgard® 184 (Härtegrad: Shore A50) von Dow Corning und Eccobond® UV 9501 (Härtegrad: Shore D43) von Emerson & Cuming erwiesen. Beide übertragen weder durch ihre thermische Dehnung noch durch zu hohe Festigkeit bei mechanischer Belastung zu hohe Spannungen auf die empfindlichen Lichtleitfasern (21). Ebenso überstehen beide gleichermaßen gut Klimatests. Sylgard® beruht auf Silikon- und Eccobond® auf Acrylat-Basis.

Eccobond® UV 9501 ist in 3 bis 8 Sekunden mit UV-Licht aushärtbar und zeichnet sich so durch eine besonders einfache Verarbeitung aus. Sylgard® 184 ist thermisch aushärtbar, z.B. durch Erwärmung auf 100°C für die Dauer von 1 Stunde, und damit aufwendiger zu handhaben.

Vergleichende Biegetests unter den gleichen Bedingungen wie zuvor beschrieben, angewendet auf Faserbündel mit dem auf diese Weise geschützten Übergangsbereichen, haben gezeigt, dass keine gebrochenen Fasern mehr auftraten.

## Patentansprüche

1. Verfahren zur Herstellung eines Geätzten Optischen Faserbündels, beinhaltend
- das Anordnen einer Anzahl von Faser-Vorformen zu einer geordneten Faserbündel-Vorform,
- Erhitzen und Ausziehen der Faserbündel-Vorform, wobei zwischen Einzelfasern (1) und Spacern (2) Zwickel (3) erzeugt werden,
- Einbringen zumindest eines Klebstoffes in die Zwickel (3) des ausgezogenen Faserbündels,
- Ummanteln zumindest eines Endes des ausgezogenen Faserbündels mit einer ätzbeständigen Schutzschicht und
- Flexibilisieren des Faserbündels durch Entfernen von Spacermaterial in den nicht ummantelten Bereichen, wobei zumindest ein starrer Endbereich (11, 20) und zumindest ein flexibler Bereich (13) entsteht,
**dadurch gekennzeichnet,**
**dass** ein Ende des ausgezogenen Faserbündels zumindest temporär verschlossen wird und Klebstoffe mit Hilfe von Unterdruck in die Zwickel (3) des anderen Endes eingebracht werden, wobei der Unterdruck durch Abkühlen der vorher erwärmten Gasvolumina in den Zwischenräumen des ausgezogenen Faserbündels erzeugt wird.

2. Verfahren nach Anspruch 1,
**dadurch gekennzeichnet,**
**dass** das zuvor verschlossene Ende des ausgezogenen Faserbündels geöffnet wird und Klebstoffe mit Hilfe von Unterdruck in die Zwickel (3) dieses Endes eingebracht werden, wobei der Unterdruck durch Abkühlen der vorher erwärmten Gasvolumina in den Zwischenräumen des ausgezogenen Faserbündels erzeugt wird.

3. Verfahren zu Herstellung eines Geätzten optischen Faserbündels, beinhaltend
- das Anordnen einer Anzahl von Faser-Vorformen zu einer geordneten Faserbündel-Vorform,
- Erhitzen und Ausziehen der Faserbündel-Vorform, wobei zwischen Einzelfasern (1) und Spacern (2) Zwickel (3) erzeugt werden,
- Einbringen zumindest eines Klebstoffes in die Zwickel (3) des ausgezogenen Faserbündels,
- Ummanteln zumindest eines Endes des ausgezogenen Faserbündels mit einer ätzbeständigen Schutzschicht und
- Flexibilisieren des Faserbündels durch Entfernen von Spacermaterial in den nicht ummantelten Bereichen, wobei zumindest ein starrer Endbereich (11, 20) und zumindest ein flexibler Bereich (13) entsteht,
**dadurch gekennzeichnet,**
**dass** die Klebstoffe mit Hilfe von Unterdruck in die Zwickel (3) eines Endes des ausgezogenen Faserbündels eingebracht wird, wobei der Unterdruck durch Pumpen erzeugt wird.

4. Verfahren nach Anspruch 3,
**dadurch gekennzeichnet,**
**dass** die Klebstoffe an beiden Enden des ausgezogenen Faserbündels mit Hilfe von Unterdruck in die Zwickel (3) eingebracht werden.

5. Verfahren nach Anspruch 3,
**dadurch gekennzeichnet,**
**dass** die Klebstoffe an dem anderen Ende des ausgezogenen Faserbündels mit Hilfe von Unterdruck in die Zwickel (3) eingebracht werden, wobei der Unterdruck durch Abkühlen der vorher erwärmten Gasvolumina in den Zwischenräumen des ausgezogenen Faserbündels erzeugt wird.

6. Verfahren nach mindestens einem der vorhergehenden Ansprüche,
**dadurch gekennzeichnet,**
**dass** die Klebstoffe in zwei starren Endbereichen (11, 20) des Faserbündels bis zu einer Füllhöhe (h) von mindestens 0,5 cm in die Zwickel (3) eingebracht sind.

7. Verfahren nach mindestens einem der vorhergehenden Ansprüche,
**dadurch gekennzeichnet,**
**dass** die Klebstoffe in zwei starren Endbereichen (11, 20) des Faserbündels bis zu einer Füllhöhe (h) von 0,5 cm bis 5 cm in die Zwickel (3) eingebracht sind.

8. Verfahren nach mindestens einem der vorhergehenden Ansprüche,
**dadurch gekennzeichnet,**
**dass** die Klebstoffe in zwei starren Endbereichen (11, 20) des Faserbündels bis zu einer Füllhöhe (h) von 1,5 cm bis 2,5 cm in die Zwickel (3) eingebracht sind.

9. Verfahren nach mindestens einem der Ansprüche 1 bis 3,
**dadurch gekennzeichnet,**
**dass** die Klebstoffe in zwei starren Endbereichen (11, 20) des Faserbündels die Zwickel (3) vollständig verfüllen.

10. Verfahren nach mindestens einem der vorhergehenden Ansprüche,
**dadurch gekennzeichnet,**
**dass** die Klebstoffe thermisch und/oder durch Lichtbestrahlung ausgehärtet werden.

11. Verfahren nach mindestens einem der vorhergehenden Ansprüche,
**dadurch gekennzeichnet,**
**dass** die Klebstoffe mit UV-Bestrahlung ausgehärtet werden.

12. Verfahren nach mindestens einem der vorhergehenden Ansprüche,
**dadurch gekennzeichnet,**
**dass** Klebstoffe mit einer Viskosität von 5·10⁻² Pa·s bis 5 Pa·s bei 25 °C verwendet werden.

13. Verfahren nach mindestens einem der vorhergehenden Ansprüche,
**dadurch gekennzeichnet,**
**dass** Klebstoffe, die beständig gegenüber heißen Ätzsäuren und/oder heißen Ätzlaugen und/oder deionisiertem Wasser sind, verwendet werden.

14. Verfahren nach mindestens einem der vorhergehenden Ansprüche,
**dadurch gekennzeichnet,**
**dass** Klebstoffe auf Epoxid- und/oder Acrylat-Basis verwendet werden.

15. Verfahren nach mindestens einem der vorhergehenden Ansprüche,
**dadurch gekennzeichnet,**
**dass** Klebstoffe, die höchstens ein geringes Auspolieren aufweisen, verwendet werden.

16. Verfahren nach mindestens einem der vorhergehenden Ansprüche,
**dadurch gekennzeichnet,**
**dass** Klebstoffe, die Nanopartikel enthalten, verwendet werden.

17. Verfahren nach zumindest einem der vorhergehenden Ansprüche
**dadurch gekennzeichnet,**
**dass** die Zwischenräume zwischen den Lichtleitfasern (21) in den Übergangsbereichen (14) zwischen den starren Endbereichen (11, 20) und den flexiblen Bereichen (13) nach der Flexibilisierung mit mindestens einem Klebstoff (22) gefüllt werden.

18. Verfahren nach Anspruch 17,
**dadurch gekennzeichnet, ,**
**dass** Klebstoffe (22) verwendet werden, die im ausgehärteten Zustand weich genug sind, um bei mechanischer Belastung Spannungen von den Lichtleitfasern (21) fernzuhalten und im ausgehärteten Zustand hart genug sind, um nicht von den Lichtleitfasern (21) zerschnitten zu werden.

19. Verfahren nach Anspruch 17 und/oder 18,
**dadurch gekennzeichnet,**
**dass** die Klebstoffe (22) mit Hilfe von Spritzen mit dünnen Nadeln eingebracht werden.

20. Verfahren nach mindestens einem der Ansprüche 17 bis 19,
**dadurch gekennzeichnet, ,**
**dass** Klebstoffe (22), die auf Silikon- und/oder Acrylat-Basis beruhen, verwendet werden.

21. Verfahren nach mindestens einem der vorhergehenden Ansprüche,
**dadurch gekennzeichnet,**
**dass** mindestens ein Ende des ausgezogenen Faserbündels mit einer Hülse (10) versehen wird.

22. Geätztes Optisches Faserbündel mit zumindest einem flexiblem Bereich (13) und starren Endbereichen (11, 20), welche Zwickel (3) aufweisen,
**dadurch gekennzeichnet,**
**dass** in die Zwickel (3) bis zu einer Füllhöhe (h) von mindestens 0,5 cm zumindest ein Klebstoff eingebracht ist.

23. Geätztes Optisches Faserbündel nach Anspruch 22,
**dadurch gekennzeichnet,**
**dass** in die Zwickel (3) bis zu einer Füllhöhe (h) von 0,5 cm bis 5 cm zumindest ein Klebstoff eingebracht ist.

24. Geätztes Optisches Faserbündel nach Anspruch 22 und/oder 23,
**dadurch gekennzeichnet,**
**dass** in die Zwickel (3) bis zu einer Füllhöhe (h) von 1,5 cm bis 2,5 cm zumindest ein Klebstoff eingebracht ist.

25. Geätztes Optisches Faserbündel mit zumindest einem flexiblen Bereich (13) und starren Endbereichen (11, 20), welche Zwickel (3) aufweisen,
**dadurch gekennzeichnet,**
**dass** die Zwickel (3) vollständig mit zumindest einem Klebstoff verfüllt sind.

26. Geätztes Optisches Faserbündel mit zumindest einem flexiblem Bereich (13) und zumindest einem starren Endbereich (11, 20), welcher Zwickel (3) aufweist,
**dadurch gekennzeichnet,**
**dass** in die Zwickel (3) zumindest ein Klebstoff eingebracht ist, dessen Viskosität im nicht ausgehärteten Zustand 5·10⁻² Pa·s bis 5 Pa·s bei 25 °C beträgt.

27. Geätztes Optisches Faserbündel nach mindestens einem der Ansprüche 22 bis 26,
**dadurch gekennzeichnet,**
**dass** die in die Zwickel (3) eingebrachten Klebstoffe beständig gegenüber heißen Ätzsäuren und/oder heißen Ätzlaugen und/oder deionisiertem Wasser sind.

28. Geätztes Optisches Faserbündel nach mindestens einem der Ansprüche 22 bis 27,
**dadurch gekennzeichnet,**
**dass** die in die Zwickel (3) eingebrachten Klebstoffe höchstens ein geringes Auspolieren aufweisen.

29. Geätztes Optisches Faserbündel nach mindestens einem der Ansprüche 22 bis 28,
**dadurch gekennzeichnet,**
**dass** die Klebstoffe auf Epoxid- und/oder Acrylat-Basis beruhen.

30. Geätztes Optisches Faserbündel nach mindestens einem der Ansprüche 22 bis 29,
**dadurch gekennzeichnet,**
**dass** die Klebstoffe Nanopartikel enthalten.

31. Geätztes Optisches Faserbündel nach mindestens einem der Ansprüche 22 bis 30,
**dadurch gekennzeichnet,**
**dass** in zumindest einem Übergangsbereich (14) zwischen dem starren Endbereich (11, 20) und dem flexiblen Bereich (13) mindestens ein Klebstoff (22) zwischen den Lichtleitfasern (21) eingebracht ist.

32. Geätztes Optisches Faserbündel nach Anspruch 31,
**dadurch gekennzeichnet,**
**dass** die Klebstoffe (22) im Übergangsbereich (14) auf Silikon- und/oder Acrylat-Basis beruhen.

33. Geätztes Optisches Faserbündel nach Anspruch 31 und/oder 32,
**dadurch gekennzeichnet,**
**dass** die Klebstoffe (22) im Übergangsbereich (14) im ausgehärteten Zustand weich genug sind, um bei mechanischer Belastung Spannungen von den Lichtleitfasern (21) fernzuhalten und im ausgehärteten Zustand hart genug sind, um nicht von den Lichtleitfasern (21) zerschnitten zu werden.

34. Geätztes Optisches Faserbündel nach mindestens einem der Ansprüche 22 bis 33,
**dadurch gekennzeichnet,**
**dass** zumindest ein Ende des Faserbündels mit einer Hülse versehen ist.

35. Verwendung des Geätzten Optischen Faserbündels nach mindestens einem der Ansprüche 22 bis 34 als Bildlichtleiter zur Übertragung von Bildinformationen.

36. Verwendung des Geätzten Optischen Faserbündels nach mindestens einem der Ansprüche 22 bis 35 in der Endoskopie.

37. Verwendung des Geätzten Optischen Faserbündels nach mindestens einem der Ansprüche 22 bis 35 für die optische Datenübertragung.

38. Verwendung des Geätzten Optischen Faserbündels nach mindestens einem der Ansprüche 22 bis 35 als Optisches Interconnect.

## Claims

1. Process for producing a leached fibre bundle, involving
- arranging a number of fibre preforms into an ordered fibre bundle preform,
- heating and drawing out the fibre bundle preform, with pockets (3) being produced between individual fibres (1) and spacers (2),
- introducing at least one adhesive into the pockets (3) in the drawn-out fibre bundle,
- sheathing at least one end of the drawn-out fibre bundle with an etch-resistant protective layer, and
- flexibilizing the fibre bundle by removing spacer material in the unsheathed regions, forming at least one rigid end region (11, 20) and at least one flexible region (13),
**characterized in that** one end of the drawn-out fibre bundle is at least temporarily closed and the adhesives are introduced into the pockets (3) of the other end with the aid of a pressure reduction, the pressure reduction being produced by cooling the preheated gas volumes in the spaces in the drawn-out fibre bundle.

2. Process according to Claim 1, **characterized in that** the previously closed end of the drawn-out fibre bundle is opened and the adhesives are introduced into the pockets (3) at this end with the aid of a pressure reduction, the pressure reduction being produced by cooling the preheated gas volumes in the spaces in the drawn-out fibre bundle.

3. Process for producing a leached fibre bundle, involving
- arranging a number of fibre preforms into an ordered fibre bundle preform,
- heating and drawing out the fibre bundle preform, with pockets (3) being produced between individual fibres (1) and spacers (2),
- introducing at least one adhesive into the pockets (3) in the drawn-out fibre bundle,
- sheathing at least one end of the drawn-out fibre bundle with an etch-resistant protective layer, and
- flexibilizing the fibre bundle by removing spacer material in the unsheathed regions, forming at least one rigid end region (11, 20) and at least one flexible region (13),
**characterized in that** the adhesives are introduced into the pockets (3) at one end of the drawn-out fibre bundle with the aid of a pressure reduction, the pressure reduction being generated by pumps.

4. Process according to Claim 3, **characterized in that** the adhesives are introduced into the pockets (3) at both ends of the drawn-out fibre bundle with the aid of a pressure reduction.

5. Process according to Claim 3; **characterized in that** the adhesives are introduced into the pockets (3) at the other end of the drawn-out fibre bundle with the aid of a pressure reduction, the pressure reduction being produced by cooling the preheated gas volumes in the spaces in the drawn-out fibre bundle.

6. Process according to at least one of the preceding claims, **characterized in that** the adhesives are introduced into the pockets (3) in two rigid end regions (11, 20) of the fibre bundle, to a filling height (h) of at least 0.5 cm.

7. Process according to at least one of the preceding claims, **characterized in that** the adhesives are introduced into the pockets (3) in two rigid end regions (11, 20) of the fibre bundle to a filling height (h) of 0.5 cm to 5 cm.

8. Process according to at least one of the preceding claims, **characterized in that** the adhesives are introduced into the pockets (3) in two rigid end regions (11, 20) of the fibre bundle to a filling height (h) of 1.5 cm to 2.5 cm.

9. Process according to at least one of Claims 1 to 3, **characterized in that** the adhesives completely fill the pockets (3) in the two rigid end regions (11, 20) of the fibre bundle.

10. Process according to at least one of the preceding claims, **characterized in that** the adhesives are cured thermally and/or by irradiation with light.

11. Process according to at least one of the preceding claims, **characterized in that** the adhesives are cured using UV irradiation.

12. Process according to at least one of the preceding claims, **characterized in that** adhesives with a viscosity of 5·10⁻² Pa·s to 5 Pa·s at 25°C are used.

13. Process according to at least one of the preceding claims, **characterized in that** adhesives which are resistant to hot etching acids and/or hot etching lyes and/or deionized water are used.

14. Process according to at least one of the preceding claims, **characterized in that** adhesives based on epoxy and/or acrylate are used.

15. Process according to at least one of the preceding claims, **characterized in that** adhesives which have at most a slight polishability are used.

16. Process according to at least one of the preceding claims, **characterized in that** adhesives which contain nanoparticles are used.

17. Process according to at least one of the preceding claims, **characterized in that** the spaces between the optical fibres (21) in the transition regions (14) between the rigid end regions (11, 20) and the flexible regions (13) are filled with at least one adhesive (22) after the flexibilizing operation.

18. Process according to Claim 17, **characterized in that** adhesives (22) which in the cured state are soft enough to keep stresses away from the optical fibres (21) under mechanical load and in the cured state are hard enough not to be cut up by the optical fibres (21) are used.

19. Process according to Claim 17 and/or 18, **characterized in that** the adhesives (22) are introduced with the aid of syringes with thin needles.

20. Process according to at least one of Claims 17 to 19, **characterized in that** adhesives (22) which are based on silicone and/or acrylate are used.

21. Process according to at least one of the preceding claims, **characterized in that** at least one end of the drawn-out fibre bundle is provided with a sleeve (10).

22. Leached fibre bundle having at least one flexible region (13) and rigid end regions (11, 20) which include pockets (3), **characterized in that** at least one adhesive is introduced into the pockets (3) to a filling height (h) of at least 0.5 cm.

23. Leached fibre bundle according to Claim 22, **characterized in that** at least one adhesive is introduced into the pockets (3) to a filling height (h) of 0.5 cm to 5 cm.

24. Leached fibre bundle according to Claim 22 and/or 23, **characterized in that** at least one adhesive is introduced into the pockets (3) to a filling height (h) of 1.5 cm to 2.5 cm.

25. Leached fibre bundle having at least one flexible region (13) and rigid end regions (11, 20) which include pockets (3), **characterized in that** the pockets (3) are completely filled with at least one adhesive.

26. Leached fibre bundle having at least one flexible region (13) and at least one rigid end region (11, 20) which includes pockets (3), **characterized in that** at least one adhesive whose viscosity in the uncured state is 5·10⁻² Pa·s to 5 Pa·s at 25°C is introduced into the pockets (3).

27. Leached fibre bundle according to at least one of Claims 22 to 26, **characterized in that** the adhesives introduced into the pockets (3) are resistant to hot etching acids and/or hot etching lyes and/or deionized water.

28. Leached fibre bundle according to at least one of Claims 22 to 27, **characterized in that** the adhesives introduced into the pockets (3) have at most a slight polishability.

29. Leached fibre bundle according to at least one of Claims 22 to 28, **characterized in that** the adhesives are based on epoxy and/or acrylate.

30. Leached fibre bundle according to at least one of Claims 22 to 29, **characterized in that** the adhesives contain nanoparticles.

31. Leached fibre bundle according to at least one of Claims 22 to 30, **characterized in that** at least one adhesive (22) is introduced between the optical fibres (21) in at least one transition region (14) between the rigid end region (11, 20) and the flexible region (13) .

32. Leached fibre bundle according to Claim 31, **characterized in that** the adhesives (22) in the transition region (14) are based on silicone and/or acrylate.

33. Leached fibre bundle according to Claim 31 and/or 32, **characterized in that** the adhesives (22) in the transition region (14) in the cured state are soft enough to keep stresses away from the optical fibres (21) under mechanical load and in the cured state are hard enough not to be cut into by the optical fibres (21).

34. Leached fibre bundle according to at least one of Claims 22 to 33, **characterized in that** at least one end of the fibre bundle is provided with a sleeve.

35. Use of the leached fibre bundle according to at least one of Claims 22 to 34 as an image light guides for the transmission of image information.

36. Use of the leached fibre bundle according to at least one of Claims 22 to 35 in endoscopy.

37. Use of the leached fibre bundle according to at least one of Claims 22 to 35 for optical data transmission.

38. Use of the leached fibre bundle according to at least one of Claims 22 to 35 as an optical interconnect.

## Revendications

1. Procédé de fabrication d'un faisceau de fibres optiques gravées, qui comprend les étapes qui consistent à :
- agencer un certain nombre d'ébauches de fibre en une ébauche aux données de faisceau de fibres,
- chauffer et étirer l'ébauche de faisceau de fibres, des interstices (3) étant créés entre les fibres individuelles (1) et des écarteurs (2),
- apporter au moins un adhésif dans les interstices (3) du faisceau de fibres étiré,
- envelopper au moins une extrémité du faisceau de fibres étiré d'une couche de protection qui résiste à la gravure et
- rendre le faisceau de fibres flexible en enlevant le matériau d'écartement dans les zones non enveloppées, ce qui fait apparaître au moins une zone d'extrémité rigide (11, 20) et au moins une zone flexible (13),
**caractérisé en ce qu'**une extrémité du faisceau de fibres étiré est fermée au moins temporairement et des adhésifs sont apportés à l'aide d'une dépression dans les interstices (3) de l'autre extrémité, la dépression étant créée par refroidissement du volume de gaz précédemment chauffé dans les espaces intermédiaires du faisceau de fibres étiré.

2. Procédé selon la revendication 1, **caractérisé en ce que** l'extrémité précédemment fermée du faisceau de fibres étiré est ouverte et des adhésifs sont apportés à l'aide d'une dépression dans les interstices (3) de cette extrémité, la dépression étant créée par refroidissement du volume de gaz précédemment chauffé dans les espaces intermédiaires du faisceau de fibres étiré.

3. Procédé de fabrication d'un faisceau de fibres optiques gravées, qui contient les étapes qui consistent à :
- agencer un certain nombre d'ébauches de fibre en une ébauche aux données de faisceau de fibres,
- chauffer et étirer l'ébauche de faisceau de fibres, des interstices (3) étant créés entre les fibres individuelles (1) et des écarteurs (2),
- apporter au moins un adhésif dans les interstices (3) du faisceau de fibres étiré,
- envelopper au moins une extrémité du faisceau de fibres étiré d'une couche de protection qui résiste à la gravure et
- rendre le faisceau de fibres flexible en enlevant le matériau d'écartement dans les zones non enveloppées, ce qui fait apparaître au moins une zone d'extrémité rigide (11, 20) et au moins une zone flexible (13),
**caractérisé en ce que** les adhésifs sont apportés à l'aide d'une dépression dans les interstices (3) d'une extrémité du faisceau de fibres étiré, la dépression étant créée par pompage.

4. Procédé selon la revendication 3, **caractérisé en ce que** les adhésifs sont apportés aux deux extrémités du faisceau de fibres étiré à l'aide d'une dépression appliquée dans les interstices (3).

5. Procédé selon la revendication 3, **caractérisé en ce que** les adhésifs sont apportés à l'autre extrémité du faisceau de fibres étiré à l'aide d'une dépression appliquée dans les interstices (3), la dépression étant créée par refroidissement du volume de gaz précédemment chauffé dans les espaces intermédiaires du faisceau de fibres étiré.

6. Procédé selon au moins l'une des revendications précédentes, **caractérisé en ce que** dans deux zones d'extrémité rigides (11, 20) du faisceau de fibres, les adhésifs sont apportés dans les interstices (3) jusqu'à une hauteur de remplissage (h) d'au moins 0,5 cm.

7. Procédé selon au moins l'une des revendications précédentes, **caractérisé en ce que** dans deux zones d'extrémité rigides (11, 20) du faisceau de fibres, les adhésifs sont apportés dans les interstices (3) jusqu'à une hauteur de remplissage (h) de 0,5 cm à 5 cm.

8. Procédé selon au moins l'une des revendications précédentes, **caractérisé en ce que** dans deux zones d'extrémité rigides (11, 20) du faisceau de fibres, les adhésifs sont apportés dans les interstices (3) jusqu'à une hauteur de remplissage (h) de 1,5 cm à 2,5 cm.

9. Procédé selon au moins l'une des revendications précédentes, **caractérisé en ce que** dans deux zones d'extrémité rigides (11, 20) du faisceau de fibres, les adhésifs remplissent complètement les interstices (3).

10. Procédé selon au moins l'une des revendications précédentes, **caractérisé en ce que** les adhésifs sont durcis thermiquement et/ou par irradiation par de la lumière.

11. Procédé selon au moins l'une des revendications précédentes, **caractérisé en ce que** les adhésifs sont durcis par irradiation d'UV.

12. Procédé selon au moins l'une des revendications précédentes, **caractérisé en ce que** les adhésifs utilisés présentent une viscosité de 5·10⁻² Pa.s à 5 Pa.s à 25°C.

13. Procédé selon au moins l'une des revendications précédentes, **caractérisé en ce que** l'on utilise des adhésifs qui résistent aux acides chauds de gravure et/ou aux bases chaudes de gravure et/ou à l'eau déminéralisée.

14. Procédé selon au moins l'une des revendications précédentes, **caractérisé en ce que** l'on utilise des adhésifs à base d'époxy et/ou à base d'acrylate.

15. Procédé selon au moins l'une des revendications précédentes, **caractérisé en ce que** l'on utilise des adhésifs qui présentent au plus un faible poli.

16. Procédé selon au moins l'une des revendications précédentes, **caractérisé en ce que** l'on utilise des adhésifs qui contiennent des nanoparticules.

17. Procédé selon au moins l'une des revendications précédentes, **caractérisé en ce que** dans les zones de transition (14) entre les zones d'extrémité rigides (11, 20) et les zones flexibles (13), les espaces intermédiaires sont remplis d'au moins un adhésif (22) après la flexibilisation.

18. Procédé selon la revendication 17, **caractérisé en ce que** l'on utilise des adhésifs (22) qui à l'état durci sont suffisamment malléables pour, en cas de sollicitation mécanique, protéger les fibres (21) conductrices de lumière des contraintes et à l'état durci sont suffisamment durs pour ne pas être arrachés des fibres (21) conductrices de lumière.

19. Procédé selon les revendications 17 et/ou 18, **caractérisé en ce que** les adhésifs (22) sont apportés à l'aide d'ajutages dotés de minces aiguilles.

20. Procédé selon au moins l'une des revendications 17 à 19, **caractérisé en ce que** l'on utilise des adhésifs (22) à base de silicone et/ou d'acrylate.

21. Procédé selon au moins l'une des revendications précédentes, **caractérisé en ce qu'**au moins une extrémité du faisceau de fibres étiré est doté d'un manchon (10).

22. Faisceau de fibres optiques gravées qui présente au moins une zone flexible (13) et des zones d'extrémité rigide (11, 20) qui présentent des interstices (3), **caractérisé en ce qu'**au moins un adhésif est apporté dans les interstices (3) jusqu'à une hauteur de remplissage (h) d'au moins 0,5 cm.

23. Faisceau de fibres optiques gravées selon la revendication 22, **caractérisé en ce qu'**au moins un adhésif est apporté dans les interstices (3) jusqu'à une hauteur de remplissage (h) de 0,5 cm à 5 cm.

24. Faisceau de fibres optiques gravées selon les revendications 22 et/ou 23, **caractérisé en ce qu'**au moins un adhésif est apporté dans les interstices (3) jusqu'à une hauteur de remplissage (h) de 1,5 cm à 2,5 cm.

25. Faisceau de fibres optiques gravées qui présente au moins une zone flexible (13) et deux zones d'extrémité rigides (11, 20) qui présentent des interstices (3), **caractérisé en ce que** les interstices (3) sont remplis complètement d'au moins un adhésif.

26. Faisceau de fibres optiques gravées qui présente au moins une zone flexible (13) et au moins une zone d'extrémité rigide (11, 20) qui présente des interstices (3), **caractérisé en ce qu'**au moins un adhésif dont la viscosité à l'état non durci est de 5·10⁻² Pa.s à 5 Pa.s à 25°C est apporté dans les interstices (3).

27. Faisceau de fibres optiques gravées selon au moins l'une des revendications 22 à 26, **caractérisé en ce que** les adhésifs apportés dans les interstices (3) résistent aux acides chauds de gravure et/ou aux bases chaudes de gravure et/ou à l'eau déminéralisée.

28. Faisceau de fibres optiques gravées selon au moins l'une des revendications 22 à 27, **caractérisé en ce que** les adhésifs apportés dans les interstices (3) présentent au plus un faible poli.

29. Faisceau de fibres optiques gravées selon au moins l'une des revendications 22 à 28, **caractérisé en ce que** les adhésifs sont à base d'époxy et/ou d'acrylate.

30. Faisceau de fibres optiques gravées selon au moins l'une des revendications 22 à 29, **caractérisé en ce que** les adhésifs contiennent des nanoparticules.

31. Faisceau de fibres optiques gravées selon au moins l'une des revendications 22 à 30, **caractérisé en ce que** dans au moins une zone de transition (14) entre la zone d'extrémité rigide (11, 20) et la zone flexible (13), au moins un adhésif (22) est apporté entre les fibres (21) conductrices de lumière.

32. Faisceau de fibres optiques gravées selon la revendication 31, **caractérisé en ce que** dans la zone de transition (14), les adhésifs (22) sont à base de silicone et/ou d'acrylate.

33. Faisceau de fibres gravé selon les revendications 31 et/ou 32, **caractérisé en ce que** dans la zone de transition (14), les adhésifs (22) sont suffisamment malléables à l'état durci pour, en cas de sollicitation mécanique, protéger des contraintes les fibres (21) conductrices de lumière et sont suffisamment durs à l'état durci pour ne pas être arrachés des fibres (21) conductrices de lumière.

34. Faisceau de fibres optiques gravées selon au moins l'une des revendications 22 à 33, **caractérisé en ce qu'**au moins une extrémité du faisceau de fibres est dotée d'un manchon.

35. Utilisation du faisceau de fibres optiques gravées selon au moins l'une des revendications 22 à 34 comme conducteur de lumière d'imagerie pour la transmission d'informations d'image.

36. Utilisation du faisceau de fibres optiques gravées selon au moins l'une des revendications 22 à 35 en endoscopie.

37. Utilisation du faisceau de fibres optiques gravées selon au moins l'une des revendications 22 à 35 pour la transmission optique de données.

38. Utilisation du faisceau de fibres optiques gravées selon au moins l'une des revendications 22 à 35 comme système d'interconnexion optique.
